# EUROPÄISCHE PATENTANMELDUNG

(11) **EP 1 342 549 A1**
(43) Veröffentlichungstag der Anmeldung: **10.09.2003**
(21) Anmeldenummer: 03002256.0
(22) Anmeldetag: 01.02.2003
(51) Int. Cl.: B29C 49/04

(54) **Verfahren zur Herstellung einer stabilen Kunststoff-Formhaut mit genarbter Oberfläche**

(30) Priorität: 06.03.2002 DE 10209941
(71) Anmelder: Bayerische Motoren Werke Aktiengesellschaft, 80809 München (DE)
(72) Erfinder: Draeger, Klaus, Dr., 80995 München (DE)

(57) **Zusammenfassung**

Im Gegensatz zu den bisher bekannten Techniken zur Herstellung von Folien, wie das Thermoformen, das Slush-moulding-Verfahren, das Powder-Slush oder Powder-Rotation-Slush-Verfahren und das Inmould coating-Verfahren, wird erfindungsgemäß ein hochwertiges Oberflächenmaterial (3) auf die Innenseite eines geöffneten Werkzeugs gesprüht. Das Werkzeug weist die gewünschte Oberflächennarbung und Bauteilkontur auf. Anschließend wird ein schlauchförmiges Trägermaterial zwischen die beiden geöffneten Werkzeughälften extrudiert und nach dem Schließen der beiden Werkzeughälften (1,2) aufgeblasen. Dadurch verbindet sich das schlauchförmige Trägermaterial mit dem gespritzten Oberflächenmaterial zu einer stabilen Kunststoff-Formhaut, die anschließend aus dem Werkzeug entnommen und in an sich bekannter Weise hinterschäumt werden kann.

## Beschreibung

Die Erfindung betrifft ein Verfahren nach dem Oberbegriff des ersten Anspruchs.

In der Zeitschrift Kunststoffe 76 (1986), Heft 10, Seiten 960 - 964 ist in dem Artikel "Dekorative Kunststoff-Folien im Kraftfahrzeug-Innenraum" ein Überblick über die Folienherstellung und ihre Weiterverarbeitung veröffentlicht. Hierbei wird beim Herstellen von mit Folie überzogenen Bauteilen zwischen mehreren Herstellungsverfahren unterschieden, nämlich zu einem dem Thermoformen, dem Slush-moulding, dem Powder-Slush oder Powder-Rotation-Slush und Inmould coating. Während beim Thermoformen eine von der Rolle kommende Folie erhitzt und vorgestreckt wird, um dann mit Hilfe eine Tiefziehwerkzeuges umgeformt zu werden, werden bei den Slush-moulding- und Powder-Slush- oder Powder-Rotation-Slush-Verfahren Folien in einem Werkzeug hergestellt, in dem ein pulverförmiges oder flüssiges Kunststoffmaterial in eine erwärmte Form gefüllt wird, nach derem Abkühlen dann die fertige Folie aus dem Werkzeug entnommen werden kann. Eine Weiterverarbeitung im Werkzeug zum Herstellen der Folie ist aus dem Inmould coating-Verfahren bekannt.

Alle genannten Verfahren haben unterschiedliche Nachteile. Entweder ist die Herstellung größerer Bauteile, wie z.B. Instrumententafeln für Kraftfahrzeuge aufgrund der Werkzeugtechnik extrem aufwändig und teuer oder aber die Oberflächennarbung mit der gewünschten Haptik lässt sich nur sehr schlecht darstellen. Bei den Slush-Verfahren ist aufgrund der Temperaturwechsel auch die Werkzeuglebensdauer sehr stark eingeschränkt.

Aufgabe der vorliegenden Erfindung ist es, ein Verfahren zur Herstellung einer stabilen Kunststoff-Formhaut vorzuschlagen, das die vorgenannten Nachteile nicht aufweist.

Diese Aufgabe wird erfindungsgemäß durch die Merkmale des ersten Anspruchs gelöst. Die Lösung basiert auf der Erkenntnis, dass die sichtbare Oberfläche nach dem Inmould coating-Verfahren hergestellt wird, dass diese dort erzeugte Formhaut aber nicht selbstständig stabil ist, sondern erst dadurch zu einer stabilen transportierbaren Formhaut wird, dass sie mit einem schlauchförmigen Trägermaterial verbunden wurde. Hierbei ist das Trägermaterial ein Schlauch, der in das Werkzeug eingeführt und dann aufgeblasen wird. Somit kann die sichtbare Oberfläche bezüglich Abbildungsgenauigkeit der Narbung sowie der Haptik aus einem sehr hochwertigen Oberflächenmaterial erzeugt werden, während das am fertigen Produkt nicht sichtbare Trägermaterial aus einem günstigen als Schlauch ausgebildeten Kunststoff-Material aufgebaut ist. Ein weiterer Vorteil des erfindungsgemäßen Verfahrens ist darin zu sehen, dass eine konventionelle Werkzeugtechnik eingesetzt werden kann. Damit werden die so hergestellten Kunststoff-Formhäute wesentlich preiswerter, da sich ihre Herstellungszeit gegenüber den bisher bekannten Verfahren erheblich reduzieren wird. Auch ist die Werkzeuglebensdauer wesentlich höher, da die im Slush-Verfahren auftretenden Werkzeugtemperaturschwankungen nicht gegeben sind.

Die Unteransprüche 2 bis 4 beschreiben bevorzugte Materialien für die Sichtseite und das Trägermaterial.

Gemäß Anspruch 5 kann die so erzeugte Kunststoff-Formhaut zum an sich bekannten Hinterschäumen zur Herstellung eines fertigen Bauteils hergenommen werden.

Nach Anspruch 6 kann vorteilhafterweise in einem Arbeitsgang eine Kunststoff-Formhaut für zwei gleiche oder zwei verschiedene Bauteile hergestellt werden.

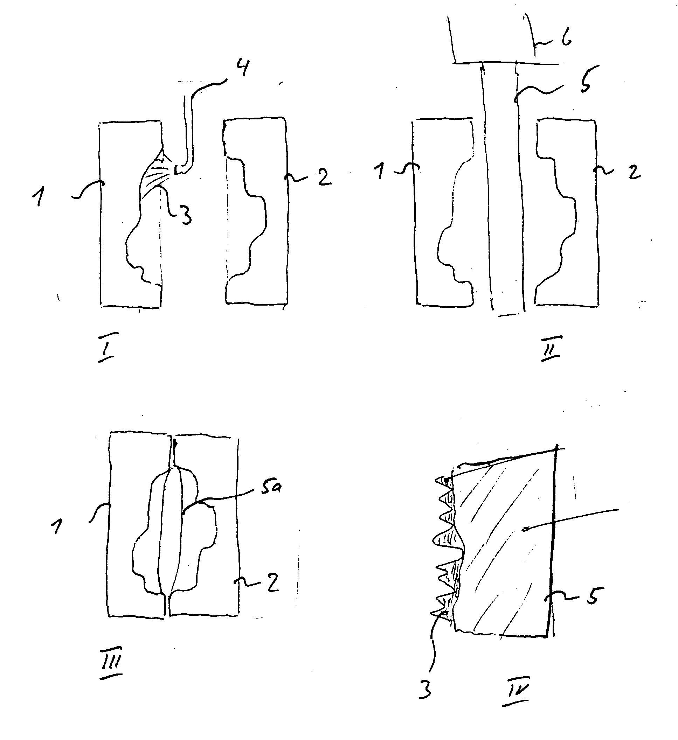

Im folgenden wird die Erfindung anhand eines bevorzugten Ausführungsbeispiels näher erläutert. In der einzigen Abbildung ist schematisiert ein geöffnetes zweiteiliges Werkzeug (Galvano) 1, 2 dargestellt. In ihm ist die gewünschte Bauteilkontur sowie die gewünschte Oberflächennarbung in an sich bekannter Weise eingearbeitet (1).

Als erstes wird ein Trennmittel auf die Konturflächen bei geöffneten Werkzeughälften 1, 2 aufgetragen. Anschließend wird ein Oberflächenmaterial 3 mit Hilfe einer geeigneten Sprühdüse 4 aufgetragen. Als Materialien kommen alle Oberflächenlacke, die auch für das Inmould-coating-Verfahren eingesetzt werden, in Betracht.

In einem weiteren Schritt (II) wird bei immer noch geöffnetem Werkzeug ein Folienschlauch 5 aus einem Extruder 6 extrudiert und zwischen die geöffneten Werkzeughälften 1, 2 eingebracht. Dieser Folienschlauch besteht aus einem aromatischen TPU minderer Qualität. Er braucht, da er nur Tragfunktion auf der Rückseite der Formhaut ausübt, nicht lichtecht zu sein.

Sodann werden die beiden Werkzeughälften 1, 2 geschlossen (III) und klemmen einen Schlauchabschnitt 5a zwischen sich ein. Der sich außerhalb der Werkzeughälften 1, 2 befindende Schlauchabschnitt wird abgetrennt.

In einem weiteren Schritt wird dann der vom Extrudieren noch heiße Folienschlauchabschnitt 5a in konventioneller Weise aufgeblasen und legt sich so an die Rückseite des Oberflächenmaterials 3 an. Dadurch kommt es zu einer Verbindung des Oberflächenmaterials 3 mit dem schlauchförmigen Trägermaterial. Nachdem sich das Trägermaterial mit dem Oberflächenmaterial 3 verbunden hat zu einer Formhaut, wird das Werkzeug geöffnet, und die nun stabile Kunststoff-Formhaut kann aus dem Werkzeug entnommen. Hierbei weist die Formhaut bereits die gewünschte Bauteilkontur auf. Anschließend kann sie entweder hinterschäumt oder zum Kaschieren verwendet werden.

Eine vergrößerten Ansicht aus der erfindungsgemäßen Formhaut zeigt IV. Hier ist sehr gut die Oberflächennarbung aus einem hochwertigen Werkstoff auf der Außenseite der Formhaut und der Folienschlauch als preiswertes Trägermaterial sichtbar.

Mit dem erfindungsgemäßen Verfahren kann in einem Arbeitsgang in jeder Werkzeughälfte 1, 2 eine Kunststoff-Formhaut gleicher oder unterschiedlicher Bauteilkontur mit einer hochwertigen Oberfläche hergestellt werden.

## Patentansprüche

1. Verfahren zur Herstellung einer stabilen Kunststoff-Formhaut mit genarbter Oberfläche, wobei ein Kunststoff in pulverförmiger oder flüssiger Form zur Erzeugung einer Oberfläche der Formhaut auf eine Werkzeugoberfläche aufgetragen wird und anschließend aushärtet,
**dadurch gekennzeichnet, dass** nach dem Auftragen des Oberflächenmaterials ein schlauchförmiges Trägermaterial mit dem Oberflächenmaterial in Kontakt gelangt, so dass nach deren Verbindung eine tragfähige Kunststoff-Formhaut aus dem Werkzeug entnommen werden kann.

2. Verfahren nach Anspruch 1,
**dadurch gekennzeichnet, dass** das Oberflächenmaterial verschieden vom Trägermaterial ist.

3. Verfahren nach Anspruch 1 oder 2,
**dadurch gekennzeichnet, dass** als Oberflächenmaterial PUR verwendet wird.

4. Verfahren nach Anspruch 1 oder 2,
**dadurch gekennzeichnet, dass** als Trägermaterial ein aromatisches TPU verwendet wird.

5. Verfahren nach einem der vorangegangenen Ansprüche,
**dadurch gekennzeichnet, dass** die hergestellte Kunststoff-Formhaut auf ein Bauteil aufkaschiert oder hinterspritzt wird.

6. Verfahren nach einem der vorangegangenen Ansprüche,
**dadurch gekennzeichnet, dass** ein aus zwei Hälften bestehendes Werkzeug mit gleicher oder unterschiedlichen Formkontur mit dem Oberflächenmaterial besprüht wird, das anschließend zwischen die geöffneten Formhälften ein Kunststoffschlauch extrudiert und nach dem Schließen der beiden Formhälften aufgeblasen wird und dass nach dem Öffnen der Werkzeughälften die Formhaut entnommen und an der Werkzeugtrennlinie aufgeschnitten wird.
